# EUROPEAN PATENT SPECIFICATION

(11) **EP 0 601 670 B1**
(45) Date of publication and mention of the grant of the patent: **19.06.1996**
(21) Application number: 93203465.5
(22) Date of filing: 09.12.1993
(51) Int. Cl.: C04B 35/52, B32B 18/00, F16J 15/20

(54) **Braided graphite-foil composite and method of application**
Geflochtener Graphit-Folieverbund und Verfahren zUr Verwendung
Composite graphite-feuille et procédé d'utilisation

(30) Priority: 09.12.1992 US 987640
(43) Date of publication of application: 15.06.1994
(73) Proprietor: Crosier, Robert Anthony, Huntersville, North Carolina 28078 (US)
(72) Inventor: Crosier, Robert Anthony, Huntersville, North Carolina 28078 (US)
(74) Representative: Boelsma, Gerben Harm, Ir.

(56) References cited:
- EP-A- 0 340 303
- FR-A- 2 054 807
- US-A- 3 404 061

## Description

The present invention relates to a reinforced vermiculated graphite textile yarn and a method for its production. For a number of years, it has been expected that braided graphite-foil yarns would become commercially viable and available. However, a method of manufacturing a low cost fiber reinforced, vermiculated natural flake graphite textile yarn suitable for braiding, weaving, twisting, and other common textile processing has been elusive, until now.

For many years asbestos has played an important role as a mechanical packing material. After centuries of faithful service, asbestos now is shunned because of its toxicity and carcinogenic nature. In high temperature applications, it has been difficult to find a substitute that will work as well as asbestos and still be cost effective.

Cables of braided graphite yarns have shown promise as offering an effective substitute for asbestos. The best of these yarns, however, have not fulfilled their promise. The reason for this is that existing methods of production have compromised the structural integrity of the braided yarn in order to produce a reinforced graphite strand. Reinforced strands of graphite are the key to an effective braided graphite yarn.

Yarns intended for braiding, weaving and other textile processes which may be formed from the reinforcing fibers are jacketed with vermiculated natural flake graphite (vermiculated graphite was first described in Aylsworth Patent numbers: 1,137,373 of 4/27/1915 and 1,191,383 of 7/18/1916) Braiding of graphite yarns is discussed in Shane et al US Patent Numbers 3,404,382 and 3,494,382. Unfortunately, a practical, low cost method of fabricating these yarns from commercially available graphite sheet material had not become commercially practical. The wrapping method described in the above patents was not commercially implemented because it was destructive to the graphite material and therefore it never could be manufactured in the manner in which it was proposed in the patents.

US Patent 1,137,373 teaches a novel form of graphite and a process for its production. This invention changes the physical orientation of flake graphite so that the flake graphite is greatly expanded in volume after treatment of the myriad of small leaves, which each flake is composed, opened up and separated like leaves of an open or partly open book. These leaves however, are not completely separated from one another. The separation is accomplished by the entrapment of gas or air between the leaves of the expanded flakes, resulting in a graphite of reduced specific gravity and vastly increased bulk or volume.

US Patent 1,191,383 teaches the use of expanded graphite from US Patent 1,137,373 compounded with a binder and other substances which can then be molded in various forms.

US Patent 3,404,061 teaches a novel form of graphite and a process of producing the same. This patent further shows that threads or yarns can be woven, braided or otherwise worked into the thin, flat, flexible graphic sheet material.

US Patent 3,494,382 teaches a tubular article comprising overlying layers of graphite material. The graphite is characterized by being composed of graphite particles which have been expanded at least 80 times and then recompressed into an integral mass. Shane also discloses that flexible graphite web materials can be produced and that it is desirable to reinforce the graphite sheets with filaments.

US Patent 3,723,157 teaches the production of resin impregnated fibrous graphite ribbons. Uniform multi-filament bundles of a fibrous material are fed through a graphitization zone at elevated temperatures resulting in the conversion of the fibrous material to graphite carbon.

US Patent 4,151,031 teaches an apparatus for continuously forming composite shapes. This apparatus locally heats a fiber-reinforced thermoplastic tape, gradually forms the strip along lines parallel to the length of the strip, then cools the strip while maintaining the desired shape. Further Goad teaches the use of a resin/graphite composite. While the end product of Goad is an I beam, the teaching of joining composites together with adhesives may be important.

US Patent 4,270,963 teaches a method of wrapping articles of indefinite length. A cable or optical fiber is wrapped in material by progressively pressing the wrapping material along a narrow width portion to the cable, then succeeding width portions are also turned around the article and pressed against it. Howat combines a tape, an adhesive and fibers.

US Patent 4,961,988 teaches a packing of expanded graphite and the process for production thereof. The packing mainly includes vermiform laminae of expanded graphite and auxiliary materials, which is characterized by embedment of the auxiliary materials into the vermiform graphite laminae and the bond of the auxiliary materials to the vermiform graphite laminae with organic adhesives. In processing the graphite Zhu teaches the creation of a sheet of graphite with a resinous material which is subsequently reinforced with fibers. The problem here is that the resin volatilizes at high temperature and a significant volume of the mass turns to ash causing it to lose volume and cohesion. This means the material cannot be removed with standard extraction tools and must be picked out of the cavity.

US Patent 5,134,030 teaches packing material made from flexible graphite sheets. A cord-like structure is produced from flexible graphite sheets cut to a width of less than 5 mm which is then twisted or braided. The flexible graphite is laminated with at least one reinforcing fiber material or foil and the surface is covered with a fiber material to achieve a synergistic action of the fiber material, flexible graphite sheet and the reinforcing fiber or foil material. Ueda teaches the equivalent of putting graphite strips into a sock and compressing it. When this material is used as a gasket with volatile hydrocarbons, the hydrocarbon molecules have a porous path to follow, preventing effective sealing. In column 1, lines 43 - 47, it is taught that flexible graphite cannot be braided or knitted.

While cables of braided graphite have theoretically been known for years, their execution has been disappointing because the effective reinforcement of vermiculated natural flake graphite has been elusive. Specifically, the actual method of joining a ribbon of graphite to reinforcing yarns while still maintaining its extreme service temperature capability has not been possible until now. Service temperatures of from -240°C (-400°F) up to 2982°C (5400°F) were not possible in earlier attempts at making these yarns. It has been found that, by encapsulating the reinforcing fibers such as quartz, INCONEL™ wire, stainless steel wire, carbon fiber, graphite fiber and/or other high temperature reinforcements in a jacket of vermiculated graphite, the loss of the adhesive coating has no effect on the overall integrity of the yarns. The adhesive material, which carbonizes in the absence of oxygen (the core of the jacketed yarns are relatively oxygen free) at elevated temperatures is no longer required as an adhesive once it has been fully encapsulated and has been processed into a textile yarn. This permits the material to be used at extremely high temperatures without significant change in service capability, also the adhesive has no significant weight or volume loss effect because it has become carbon which is very suitable for the services intended.

This simple, inexpensive yarn is made by slitting a vermiculated graphite roll into ribbons having suitable widths for this purpose. The ribbons are mounted into a "protrusion" device, which is a combination extrusion/pultrusion die, wherein the workpiece is fed into the die by rollers and the product is removed by pulling from the exit end of the die. The end of the graphite ribbon is fed through a compression roller with a ribbon of two sided adhesive thin plastic film. One side is then bonded to the ribbon of graphite, the other side is intended for the reinforcing fiber. As the graphite ribbon leaves the compression rollers bonded to the adhesive strip, the protective paper or plastic is stripped, exposing the adhesive on the outside surface of the laminated ribbon to permit the reinforcing fibers to attach themselves to the adhesive surface of the laminated ribbon.

Fibrous strands are then threaded into the protrusion device to be laid up on the adhesive matrix and to become attached to the ribbon. The fiber reinforced laminated ribbon which still has exposed adhesive on the surface is then fed at a critical angle through a tapered, cone shaped circular die having a specific geometry suitable for curling the fiber and adhesive coated surface inward upon itself, so that the curled ribbon will adhere to itself when compressed into the final protrusion die forming a finished fiber reinforced composite strand of expanded graphite flake having suitable tensile strength, flexibility, and toughness to permit braiding, weaving and other processing making it commercially useful wherever a dry, lubricious, strong, flexible material is desirable.

The invention provides apparatus and a method for production of braided graphite-foil yarns. During normal operation, a ribbon of vermiculated graphite a ribbon of plastic adhesive film and a reinforcing fiber are brought together, and passed through the conical die which founds these elements onto themselves. Pressure is then applied to form a fiber reinforced composite strand of expanded graphite flake having suitable tensile strength, flexibility, and toughness to permit braiding, weaving and other processing. The present invention is particularly useful for the production of braided graphite-foil yarns.

The principal object of the invention is to provide an improved method of producing a strand of reinforced graphite-foil yarn which is the basis of the braided graphite-foil yarns.

A further object of this invention is to provide a method of
curling the fiber and adhesive coated surface inward upon itself, so that the curled ribbon will adhere to itself when compressed into the final protrusion die forming a finished fiber reinforced composite strand of expanded graphite flake.

A further object of this invention is to provide a method of fully encapsulating the adhesive and reinforcing fibers, preventing these areas from becoming a leak path.

Another object of the invention is to provide a gasket made of braided graphite which can effectively replace asbestos gaskets and work effectively at temperatures at or above 1204°C (2200° Fahrenheit), as well as at cryogenic temperatures.

A further object of this invention is to provide a method of fully encapsulating the adhesive protecting it from chemical exposure.

A further object of this invention is to provide a method of fully encapsulating the adhesive allowing carbonization of the adhesive when exposed to high temperatures.

Another object of the invention is to provide apparatus for a tapered, cone shaped circular die having a specific geometry suitable for curling the fiber and adhesive coated surface inward upon itself, so that the curled ribbon will adhere to itself when compressed into the final protrusion die forming a finished fiber reinforced composite strand of expanded graphite flake having suitable tensile strength, flexibility, and toughness to permit braiding, weaving or other textile processing, making it commercially useful wherever a dry lubricious, strong, flexible material is desirable.

The foregoing and other objects will become more readily apparent by referring to the following detailed description and the appended drawings in which:
Figure 1 is an isometric view of a portion of the braided graphite-foil yarn.
Figure 2 is an isometric view of a portion of the cone shaped curling die and the compression die which the reinforced graphite-foil strands are passed.
Figure 3 is a front view illustrating the production of a strand of reinforced graphite-foil yarn which is the basis of the braided graphite-foil yarns.
Figure 4 is an isometric view of a cone shaped curling die illustrating the geometry of its interior.
Figure 5 is a cross sectional view of the cone-shaped curling die of Figure 4.
Figure 6 is a front view illustrating an alternative embodiment for the production of a round strand of reinforced graphite-foil yarn which includes a second calendaring die.
Figure 7 is a cross section of an unprocessed portion of the reinforced graphite-foil strand.
Figure 8a is an isometric cross sectional view of an unprocessed portion of a reinforced graphite-foil strand.
Figure 8b is an isometric cross sectional view of a partially processed graphite-foil strand.
Figure 8c is an isometric cross sectional view of a compressed graphite-foil strand.
Figure 9 is a front view of a reinforced graphite-foil strand being passed through a die.
Figure 10 is an isometric view of a round reinforced graphite-foil strand.
Figure 11 is an isometric view of a gasket formed from braided graphite-foil yarn.
Figure 12 is an isometric view of an endless ring gasket formed from braided graphite-foil yarn.
Figure 13 is an isometric view of an alternative cone-shaped curling die illustrating the geometry of its interior.
Figure 14 is a cross sectional view of the alternative cone shaped curling die of Figure 13.

Referring now to the drawings, and particularly to Figure 3, a simple, inexpensive yarn is made by slitting a vermiculated graphite roll 20 into ribbons having suitable widths for this purpose. While a number of widths are possible, a preferred width of the vermiculated graphite ribbon 44 is 0,9525 cm (0.375 inches) wide by 0,0381 cm (0.015 inches) thick, while having a length of many meters. The ribbon of vermiculated graphite 44 and a ribbon of plastic adhesive film 46, such as polyester, cellophane, or acrylic, having a protective plastic or paper strip 26 are fed through compression rollers 22. The plastic adhesive is conveniently about 0,508 cm (0.2 inches) in width with a depth of about 0,000635 cm (0.00025 inches) (one-quarter mil). The ribbon of vermiculated graphite 44 is laminated in the compressive protrusion rollers 22 with a ribbon of a suitably thin plastic film 46 so the exposed side is covered with protective plastic film 26. As the ribbon leaves the compression rollers, the protective plastic film 26 is stripped by a peeler 42, exposing the adhesive on the outside surface of the laminated ribbon 48, after which reinforcing fibers 30 are placed on and attach themselves to the adhesive surface of the laminated ribbon. The reinforcing fiber may be made up of thousands of monofilaments. Alternatively the reinforcing fiber can be a single fiber or a bundle of fibers.

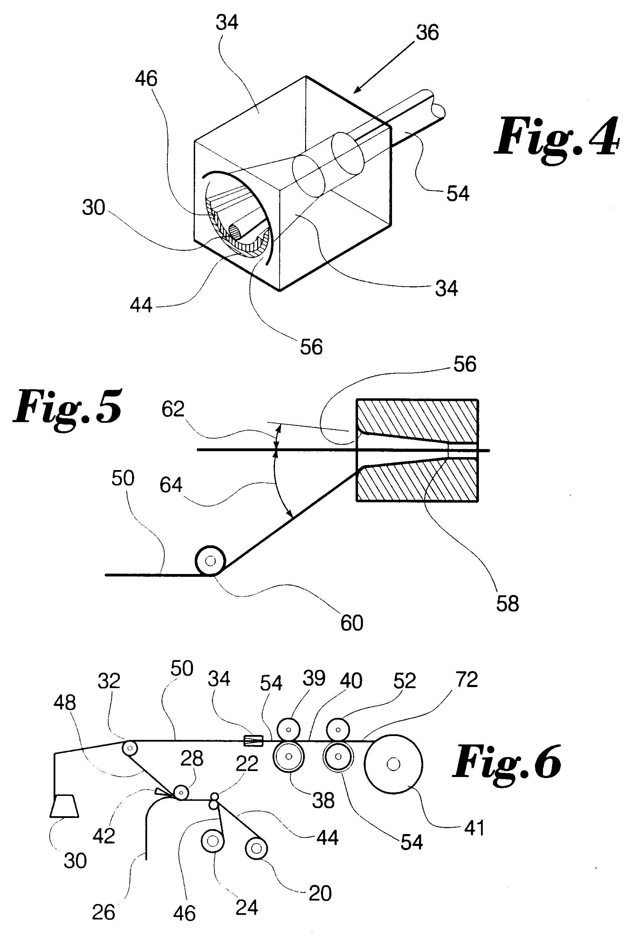

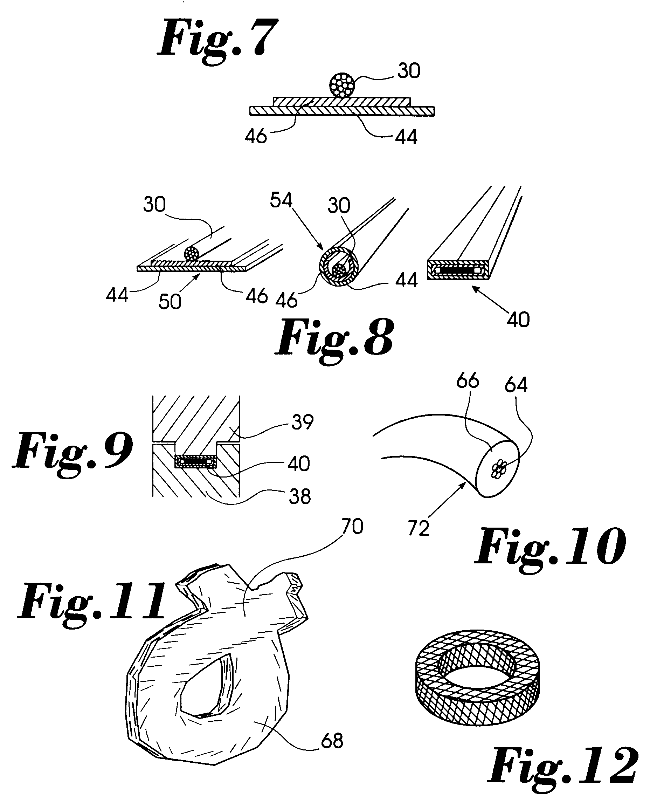

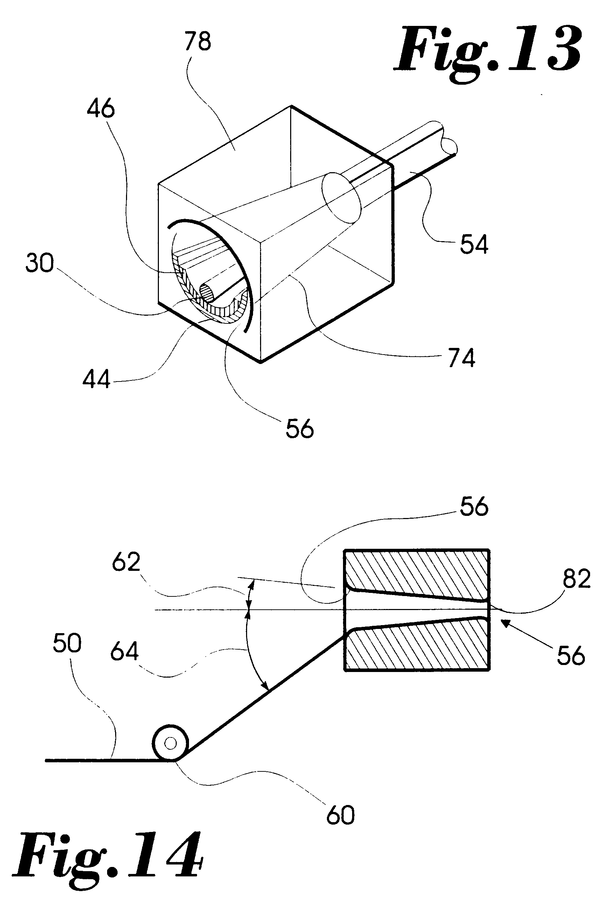

Fibrous strands are threaded into the protrusion device at roller 32, at which point the reinforcing fiber 30 is adhesively attached to the laminated ribbon 48. The fiber reinforced laminated ribbon 50 (also shown in Figure 8a) which still has exposed adhesive on the surface is then fed at a critical angle 64 of about 10° to 40°, but preferably from 20° to 30°, through a tapered, cone shaped, circular cross-section die 34 having a specific geometry suitable for curling the fiber and adhesive coated surface inward upon itself, as shown by reference numeral 52 in Figure 2, so that the curled fiber reinforced ribbon 54, also shown in Figure 8b, will adhere to itself. Interior geometry of the cone shaped circular die 34 is shown in Figure 5 where the angle 62 of the cone is from about 10° to 20°. The entrance to the cone shaped circular die 34 has a radius 56. On the interior of the die 34, the cone 74 extends about three-quarters of the way into the die, then radius surface 58 leads into a straight or tubular portion 76 of the die. Alternatively cone 74, as shown in Figure 13, can extend all the way through the die 78, so it terminates at the exit orifice 80 of the die. In this configuration it is preferable that the exit orifice 80 be provided with radius 82 to inhibit scoring or tearing of the ribbon 54 upon exiting the die.

The curled fiber reinforced ribbon 54 is fed into the final calendar protrusion die 38, 39, where it is compressed, as shown in Figure 9, forming a finished fiber reinforced composite strand 40 of expanded graphite flake having suitable tensile strength, flexibility, and toughness to permit braiding, weaving and other processing, making it commercially useful wherever a dry lubricous, strong, flexible material is desirable. The finished fiber reinforced composite strand 40 of expanded graphite flake is then collected on a roller 41.

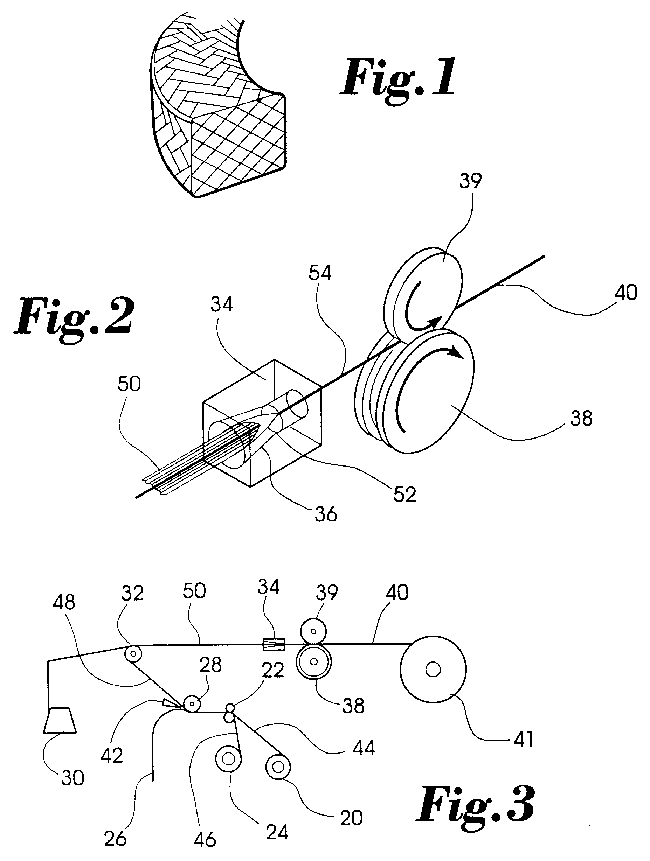

Fiber reinforced composite strands 40 of expanded graphite flake can then be braided together to form braided graphite-foil yarn 10 as shown in Figure 1.

While a rectangular finished fiber reinforced composite strand 40 of expanded graphite flake can be produced by the apparatus depicted in Figure 3, there are applications where it is preferable to have a round finished fiber reinforced composite strand 72 of expanded graphite flake as shown in Figure 10. To produce such a strand, the apparatus of Figure 3 is modified as shown in Figure 6. The apparatus of Figure 6 is identical to that of Figure 3, but with the addition of protrusion die rolls 52, 53. The curled fiber reinforced ribbon 54 (Figure 6), is fed into the first calendar protrusion die 38, 39 where it is compressed as shown in Figure 9, forming a rectangular fiber reinforced composite strand 40 (Figure 8c) of expanded graphite flake. In order to make a round strand, the rectangular fiber reinforced composite strand 40 of Figure 6 is fed through a second calendar protrusion die 52, 53, where it is compressed, forming a round fiber reinforced composite strand 72, as in Figure 10, which can then be collected on the take up roller 41 of Figure 6. It is also possible to pull composite strand 40 through a second die, such as die 34 or 78, to yield a round strand 72.

Due to the improved method of producing a reinforced strand of vermiculated natural flake graphite, when the strands are braided into a yarn, applications that were not possible before are now possible. First, when braided or woven into suitable cross sections, the material can be used as an electrically conductive joint sealant for electronic cabinetry for the purpose of providing electrical continuity for static electricity protection and as a jointing for protection for background radio interference in a Faraday Cage device. Second, in its braided, twisted or woven forms, reinforced vermiculated graphite yarn can be used as a jointing and sealant which can be placed into sealing cavities and compressed to form into a homogeneous mass conforming to exact geometry of the seal cavity providing a positive sealing medium. It is also capable of outstanding protection against destructive electrolytic or galvanic action on the metal surfaces by reducing the electric potential by sealing out electric current inducing electrolytes present in the sealed media, and further, (because it is highly conductive electrically) by short circuiting any possible electrochemically induced electrical current from attacking metal surfaces.

When used as a gasket as described above, the braided graphite strand can be used in two ways. First, an endless ring gasket can be formed from the braided graphite material as shown in Figure 12. Second, when not preformed, the braided graphite 10, as shown in Figure 1, can be used on site to form a gasket of the desired size. The braided graphite can be cut to the approximate length, then laid in the connection area with the ends 90, 92 overlapped. When compressed, a gasket is formed as shown in Figure 11. The overlapped area 70 has the same thickness as the non-overlapped areas 68. This gasket-forming process has three significant advantages: 1) each gasket can be produced as needed so that sized preformed gaskets need not be stocked; 2) the overlapped ends provide tabs which facilitate removal in tight areas; 3) gaskets of unusual size and shape can easily be configured.

Gaskets formed of the material made by the invented process can be used in pumps where the braided graphite-foil yarn acts as a heat sink in the sealing cavity allowing the pumps to run leak- free without cooling liquid flushes at peripheral shaft speeds up to 1463 m (4800 ft)/minute.

It has also been found that braided graphite gaskets, and other braided graphite items, stand up under extremes of temperature. They operate successfully at temperatures as low as -240°C (-400°F), and at temperatures as high as 2982°C (5400°F.) Graphite sublimes (changes from a solid state to a gaseous state) between 3652°C (6605°F) and 3697°C (6687°F.) (Note that while carbon is amorphous, graphite is crystalline). The preferred upper operating limit is about 1260°C (2300°F.)

From the foregoing, it is readily apparent that I have invented an improved method of producing a strand of reinforced graphite-foil yarn which is the basis of the braided graphite-foil yarns. Also encompassed is a method of curling the fiber and adhesive coated surface inward upon itself, so that the curled ribbon will adhere to itself when compressed into the final protrusion die forming a finished fiber reinforced composite strand of expanded graphite flake. This method ensures the full encapsulation of adhesive and reinforcing fibers, preventing these areas from becoming a leak path when the material is used as a seal. Full encapsulation also protects the adhesive and reinforcing fibers from chemical exposure and insures structural integrity at high temperatures. Utilizing this method braided graphite-foil yarns can be produced faster and more economically than heretofore has been possible.

It is to be understood that the foregoing description and specific embodiments are merely illustrative of the best mode of the invention and the principles thereof, and that various modifications and additions may be made to the apparatus by those skilled in the art, without departing from the spirit and scope of this invention, which is therefore understood to be limited only by the scope of the appended claims.

## Claims

1. Apparatus for forming a laminated vermiculated graphite ribbon having sufficient tensile strength, flexibility, and toughness suitable for braiding, weaving, and compressing, comprising:
a source of vermiculated graphite ribbon of predetermined width;
means for laminating said ribbon of vermiculated graphite with a ribbon of plastic adhesive film;
means for adhesively laying a reinforcing fiber on one side of said laminated vermiculated graphite ribbon;
means for curling said laminated vermiculated graphite ribbon inward upon itself about said reinforcing fiber to form a curled fiber reinforced ribbon; and
means for compressing said curled fiber reinforced ribbon into a finished fiber reinforced composite strand.

2. Apparatus according to claim 1 wherein said means for curling said laminated vermiculated graphite ribbon inwardly is a tapered, cone shaped circular die of a specific geometry.

3. Apparatus according to claim 2 wherein the taper angle of said cone shaped circular die from its central axis is from 5 to 60 degrees.

4. Apparatus according to claim 3 wherein the angle of said cone shaped circular die is from 10 to 20 degrees.

5. Apparatus according to claim 2, further comprising means for feeding the reinforcing fiber, adhesive film and vermiculated graphite ribbon into said die at an angle from about 10 to 40 degrees.

6. Apparatus according to claim 7 wherein the reinforcing fiber, adhesive strip and vermiculated graphite laminate ribbon is fed into the die at an angle of from 20 to 30 degrees.

7. A method of producing a strand of reinforced graphite-foil comprising:
slitting a vermiculated graphite roll into a ribbon of vermiculated graphite;
laminating said ribbon of vermiculated graphite with a ribbon of plastic adhesive film having a protective film thereon, forming a laminated vermiculated graphite ribbon;
stripping said protective film away from laminated vermiculated graphite ribbon;
laying a reinforcing fiber on one side of said laminated vermiculated graphite ribbon;
curling said laminated vermiculated graphite ribbon inward upon itself forming a curled fiber reinforced ribbon; and
compressing said curled fiber reinforced ribbon into a finished fiber reinforced composite strand.

8. A method of making braided graphite-foil yarn comprising
preparing a plurality of fiber reinforced composite strands in accordance with claim 7, followed by braiding multiple strands into a finished product.

9. A method of making an electrically conductive joint sealant, comprising:
preparing a plurality of fiber reinforced composite strands in accordance with claim 7, followed by braiding multiple strands into an electrically conductive joint sealant.

10. A method of making an electrically conductive joint sealant for a cavity in accordance with claim 9, further comprising:
compressing said braided graphite-foil yarn to form a homogeneous mass conforming to the exact geometry of the seal cavity.

11. A method of making a liquid pump sealant comprising:
preparing a plurality of fiber reinforced composite strands in accordance with claim 7, followed by braiding multiple strands into an endless ring gasket.

12. A method of making a liquid pump sealant comprising:
preparing a plurality of fiber reinforced composite strands in accordance with claim 7, followed by braiding multiple strands into an elongated braided strand of approximate predetermined length, then overlapping the ends of the braided strand, and compressing the strand with the ends overlapped, thereby forming a gasket;
wherein the braided graphite-foil yarn acts as a heat sink in the sealing cavity allowing a pump to run leak-free without cooling liquid flushes at peripheral shaft speeds up to 1463m/minute (4800ft/minute).

## Patentansprüche

1. Vorrichtung zum Herstellen eines laminierten Vermikulargraphitbandes, das ausreichend Zugfestigkeit, Flexibilität und Zähigkeit aufweist, so daß es sich zum Flechten, Weben und Verdichten eignet, die umfaßt:
einen Vorrat eines Vermikulargraphitbandes vorgegebener Breite;
eine Einrichtung zum Laminieren des Bandes aus Vermikulargraphit mit einem Band aus Kunststoffklebfilm;
eine Einrichtung zum Aufkleben einer verstärkenden Faser auf eine Seite des laminierten Vermikulargraphitbandes;
eine Einrichtung zum spiralförmigen Eindrehen des laminierten Vermikulargraphitbandes um die verstärkende Faser herum, um so ein spiralförmig gedrehtes, faserverstärktes Band herzustellen; und
eine Einrichtung zum Verdichten des spiralförmig gedrehten, faserverstärkten Bandes zu einem fertigen faserverstärkten Verbundstrang.

2. Vorrichtung nach Anspruch 1, wobei die Einrichtung zum spiralförmigen Eindrehen des laminierten Vermikulargraphitbandes eine sich verjüngende, kegelförmige, runde Düse mit spezieller Form ist.

3. Vorrichtung nach Anspruch 2, wobei der Verjüngungswinkel der kegelförmigen, runden Düse von ihrer Mittelachse aus 5 bis 60° beträgt.

4. Vorrichtung nach Anspruch 3, wobei der Winkel der kegelförmigen, runden Düse 10 bis 20° beträgt.

5. Vorrichtung nach Anspruch 2, die des weiteren eine Einrichtung zum Zuführen der verstärkenden Faser, des Klebefilms und des Vermikulargraphitbandes zu der Düse in einem Winkel von ungefähr 10 bis 40° umfaßt.

6. Vorrichtung nach Anspruch 7, wobei die verstärkende Faser, der Klebestreifen und das Vermikulargraphit-Laminatband der Düse in einem Winkel von 20 bis 30° zugeführt werden.

7. Verfahren zum Herstellen eines Strangs aus verstärkter Graphitfolie, das umfaßt:
Längsschneiden einer Vermikulargraphitrolle zu einem Band aus Vermikulargraphit;
Laminieren des Bandes aus Vermikulargraphit mit einem Band aus Kunststoffklebfilm, der einen Schutzfilm darauf aufweist, so daß ein laminiertes Vermikulargraphitband entsteht;
Abziehen des Schutzfilms von dem laminierten Vermikulargraphitband;
Auflegen einer verstärkenden Faser auf eine Seite des laminierten Vermikulargraphitbandes;
spiralförmiges Eindrehen des laminierten Vermikulargraphitbandes, so daß ein spiralförmig gedrehtes, faserverstärktes Band entsteht; und
Verdichten des spiralförmig gedrehten, faserverstärkten Bandes zu einem fertigen faserverstärkten Verbundstrang.

8. Verfahren zum Herstellen von geflochtenem Graphitfoliengarn, das umfaßt:
Herstellen einer Vielzahl faserverstärkter Verbundstränge nach Anspruch 7 und anschließendes Flechten mehrerer Stränge zu einem Fertigerzeugnis.

9. Verfahren zum Herstellen eines elektrisch leitenden Verbindungsstellendichtungsmittels, das umfaßt:
Herstellen einer Vielzahl faserverstärkter Verbundstränge nach Anspruch 7 und anschließendes Flechten mehrerer Stränge zu einem elektrisch leitenden Verbindungsstellendichtungsmittel.

10. Verfahren zum Herstellen eines elektrisch leitenden Verbindungsstellendichtungsmittels für einen Hohlraum nach Anspruch 9, das des weiteren umfaßt:
Verdichten des geflochtenen Graphitfoliengarns, so daß eine homogene Masse entsteht, die genau der Form des Dichtungshohlraums entspricht.

11. Verfahren zum Herstellen eines Flüssigkeitspumpendichtungsmittels, das umfaßt:
Herstellen einer Vielzahl faserverstärkter Verbundstränge nach Anspruch 7 und anschließendes Flechten mehrerer Stränge zu einer endlosen Ringdichtung.

12. Verfahren zum Herstellen eines Flüssigkeitspumpendichtungsmittels, das umfaßt:
Herstellen einer Vielzahl faserverstärkter Verbundstränge nach Anspruch 7 und anschließendes Flechten mehrerer Stränge zu einem länglichen, geflochtenen Strang, der ungefähr vorgegebene Länge aufweist und anschließendes Übereinanderlegen der Enden des geflochtenen Strangs und Verdichten des Strangs mit übereinanderliegenden Enden, so daß eine Dichtung entsteht;
wobei das geflochtene Graphitfoliengarn als ein Wärmeableiter in dem Dichtungshohlraum dient, so daß eine Pumpe dicht ohne Kühlflüssigkeitspülungen bei Umfangswellengeschwindigkeiten von bis zu 1436 m/min (480 ft/min) laufen kann.

## Revendications

1. Dispositif pour former un ruban de graphite vermiculé laminé présentant une résistance à la traction suffisante, de la flexibilité, et une dureté adaptée pour le tressage, le tissage et la compression, comprenant :
- une source de ruban en graphite vermiculé d'une largeur prédéterminée;
- des moyens pour laminer le ruban de graphite vermiculé au moyen d'un ruban de film adhésif en plastique;
- des moyens pour déposer de façon adhésive une fibre de renfort sur un côté du ruban de graphite vermiculé laminé;
- des moyens pour rouler le ruban de graphite vermiculé laminé vers l'intérieur de lui-même autour de la fibre de renfort pour former un ruban renforcé avec de la fibre roulé; et
- des moyens pour comprimer le ruban renforcé avec de la libre roulé pour former un toron composite renforcé avec de la fibre fini.

2. Dispositif selon la revendication 1, dans lequel les moyens pour rouler le ruban de graphite vermiculé laminé vers l'intérieur est un moule circulaire, en forme de cône, pointu, ayant une géométrie spécifique.

3. Dispositif selon la revendication 2, dans lequel l'angle de la pointe du moule circulaire en forme de cône mesuré à partir de son axe central est de 5 à 60°.

4. Dispositif selon la revendication 3, dans lequel l'angle du moule circulaire en forme de cône est de 10 à 20°.

5. Dispositif selon la revendication 2, comprenant de plus des moyens pour alimenter la libre de renfort, le film adhésif et le ruban de graphite vermiculé dans le moule suivant un angle d'environ 10 à 40°.

6. Dispositif selon la revendication 5, dans lequel la fibre de renfort, la bande adhésive et le ruban laminé de graphite vermiculé est alimentée dans le moule suivant un angle de 20 à 30°.

7. Procédé pour produire un toron de feuille de graphite renforcé comprenant :
- la refente d'un rouleau de graphite vermiculé pour obtenir un ruban de graphite vermiculé;
- le laminage du ruban de graphite vermiculé avec un ruban de film adhésif plastique comportant un film de protection sur lui, formant un ruban de graphite vermiculé laminé:
- le pelage du film protecteur pour l'enlever du ruban de graphite vermiculé laminé;
- le dépôt d'une fibre de renfort sur un côté du ruban de graphite vermiculé laminé;
- le roulage du ruban de graphite vermiculé laminé vers l'intérieur de lui-même pour former un ruban renforcé avec de la fibre roulé; et
- la compression du ruban renforcé avec de la fibre roulé pour obtenir un toron composite renforcé avec de la fibre fini.

8. Procédé pour fabriquer un fil de feuille de graphite tressé comprenant :
- la préparation de plusieurs torons composites renforcés avec de la fibre selon la revendication 7, suivie du tressage de plusieurs torons pour former un produit fini.

9. Procédé de fabrication d'un matériau d'étanchéité formant joint conducteur électriquement, comprenant:
- la préparation de plusieurs torons composites renforcés avec de la fibre selon la revendication 7, suivie du tressage de plusieurs torons pour former un matériau d'étanchéité formant joint conducteur électriquement.

10. Procédé pour fabriquer un matériau d'étanchéité formant joint conducteur électriquement pour une cavité selon la revendication 9, comprenant de plus :
- la compression du fil de feuille de graphite tressé pour former une masse homogène conformée à la géométrie exacte de la cavité d'étanchéité.

11. Procédé pour fabriquer un matériau d'étanchéité de pompe de liquide comprenant :
- la préparation de plusieurs torons composites renforcés avec de la fibre selon la revendication 7, suivie du tressage de plusieurs torons pour former un joint en forme d'anneau sans fin.

12. Procédé pour fabriquer un matériau d'étanchéité de pompe de liquide, comprenant :
- la préparation de plusieurs torons composites renforcés avec de la fibre selon la revendication 7, suivie par le tressage de plusieurs torons pour former un toron tressé allongé d'une longueur prédéterminée approximative, puis le recouvrement des extrémités du toron tressé, et la compression du toron avec ses extrémités se recouvrant, de manière à former un joint;
dans lequel le fil de feuille de graphite tressé agit comme dissipateur de chaleur dans la cavité d'étanchéité en permettant à la pompe de fonctionner sans fuite et sans écoulement de liquide de refroidissement à des vitesses d'arbre périphériques atteignant 1463 m/mn (4800 ft/minute).
